# EUROPEAN PATENT SPECIFICATION

(11) **EP 4 283 182 B1**
(45) Date of publication and mention of the grant of the patent: **13.11.2024**
(21) Application number: 22382492.1
(22) Date of filing: 23.05.2022
(51) Int. Cl.: F17C 3/10

(54) **CRYOGENIC TANK**
KRYOGENTANK
RÉSERVOIR CRYOGÉNIQUE

(43) Date of publication of application: 29.11.2023
(73) Proprietor: Aciturri Engineering, S.L., 47151 Boecillo Valladolid (ES)
(72) Inventor: CIMADEVILLA GARCÍA, David, 47151 BOECILLO (Valladolid) (ES); ORTEGA SAN MARTÍN, Javier, 47151 BOECILLO (Valladolid) (ES)
(74) Representative: Herrero & Asociados, S.L.

(56) References cited:
- EP-A1- 0 972 727
- CN-A- 108 854 166
- DE-A1- 102016 204 073
- FR-A1- 2 996 625
- US-A- 4 228 759

## Description

### TECHNICAL FIELD

The invention belongs to the fuel sector and in particular to the storage of hydrogen in liquid form.

### STATE OF THE ART

Hydrogen is used in a large number of industrial applications. The largest consumers of hydrogen are companies that synthesize ammonia, oil refineries and methanol production plants. The rest is divided between the pharmaceutical, food and electronics industries.

Among the new applications of hydrogen are fuel cells and its direct use as fuel in the transport sector. The use of hydrogen as a fuel has various positive consequences for the environment:
- It is a clean energy vector, which only leaves water vapor as a residue. Therefore, it is more environmentally friendly than fossil fuels.
- It is inexhaustible.
- It can be applied to a large number of activities, from industry to mobility or the domestic sphere.
- It allows large-scale storage and transportation.
- It is more efficient than the use of batteries to store electricity. For example, a hydrogen vehicle is recharged in 5 minutes and has the same autonomy as a combustion vehicle.
- It stores three times more energy per unit weight than aviation fuels such as JP8.

All these advantages make hydrogen an efficient, clean, and safe source of energy. However, its storage faces some drawbacks that require a specific approach for its use, for example in aviation, where it is of vital importance:
- Reducing the weight impact of the tank on the aircraft weight. To achieve this reduction, an important improvement is that the structure of the aircraft itself can totally or partially perform the functions of the tank without penalizing the weight of said structure.
- Having a solution with a durability equivalent to that of the aircraft, which is currently around 120,000 hours of use.
- Having a highly reliable system, in which the probability of system failure is below 1/10⁹ failures per hour of operation without requiring revisions in periods of less than 5,000 hours of use.

Known cryogenic tanks for storing H₂ in liquid form (LH₂) all respond to the same fundamental architecture with the following components:
- Internal cryogenic tank for liquid hydrogen at 20K and 1 Bar pressure capable of withstanding a slightly higher pressure to allow management of venting aimed at maintaining a stable temperature.
- External insulation tank, subjected to atmospheric pressure against an interior in a high vacuum condition (P < 100mTorr) comprising a multilayer insulation to prevent heat transmission by radiation, in order to provide optimum insulation to the internal tank.
- Suspension structure of the inner tank in the outer tank.
- LH₂ refueling, extraction and venting systems.
- LH₂ heating system to control overcooling in situations of high consumption or to increase the pressure to facilitate the extraction of H₂

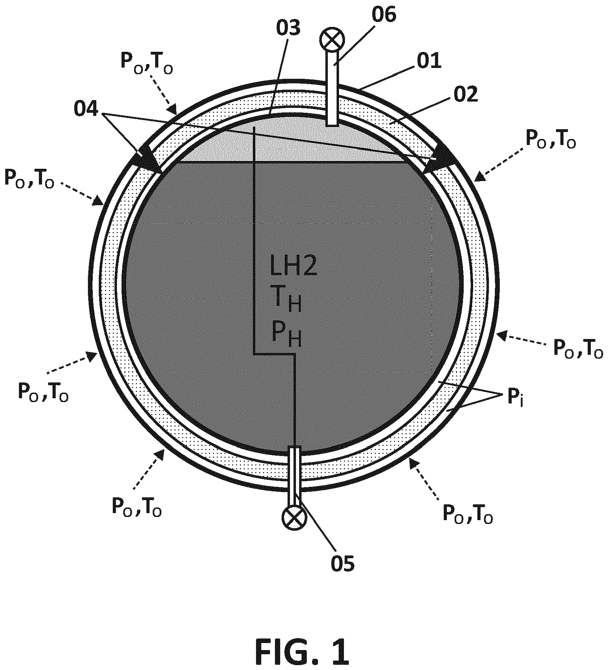

This type of tank with two tanks and a vacuum in the space between them (figure 1) suffers from weight and volume problems (especially significant in air transport). In addition, the internal tank is subjected to pressure variations that induce tensions and deformations that cause its deterioration due to the fatigue of the material that produces the appearance of micro-cracks that in turn give rise to a loss of impermeability to hydrogen, causing the loss of the high vacuum condition necessary for the effectiveness of thermal insulation.

Therefore, it is convenient to find a solution that allows reducing the weight, volume and tensions that act on the tanks. In this sense, tanks for natural gas have been developed in which the high vacuum insulation is replaced by insulations immersed in gas coming from the fluid itself, controlling the pressure difference by means of a valve or a set of valves that limit said pressure difference. An example of these solutions is shown in patent FR2996625A, which has the following drawbacks:
- Flow regulation is managed by valves with moving parts, which involve the consequent risk of mechanical failure.
- Flow regulation between tanks is done outside the tank itself, thereby absorbing heat from outside in all gas flows through the valves.
- The LH₂ evaporation enthalpy is not used to cool the H₂ gas inside the inner tank.

### SUMMARY OF THE INVENTION

The present invention solves the problems outlined above by means of a tank for the storage of liquid hydrogen provided with an inner cryogenic tank and an outer tank. A thermal insulation between both tanks allows the passage of gaseous hydrogen and a regulation of the pressure difference between the inner tank and the space between tanks by means of an evaporator without moving parts located inside the inner tank. The function of this evaporator is to ensure that, in the communication between the inner tank and the space between tanks, the flow of H₂ towards the latter always occurs in a gaseous state. Insulation may be permeable to hydrogen, or a small upper opening may be provided therein to allow the passage of hydrogen between the faces of the insulation facing the inner surface of the outer tank and the outermost surface of the inner tank in order to maintain a single H₂ pressure in the entire space between tanks.

Thanks to the maintenance of the differential pressure at predetermined or null levels, depending on how the communication between the interior tank and the space between tanks is configured through the evaporator, a weight reduction of the assembly is possible, since the exterior tank works with internal pressure of a maximum of 12.8 BAR (this pressure may be lower depending on how the safety discharge valve is configured) instead of being subjected to crushing by outside pressure as in the state of the art with high vacuum insulation. The external tank, therefore, can be a simple membrane that will work under an internal pressure that is always greater than the ambient pressure and that will be, depending on the solution applied, at temperatures similar to the ambient one or at a minimum design temperature chosen that is compatible with the outer tank material. The inner tank at a ~20K cryogenic temperature is not subjected to relevant pressure cycling or loading, nor is it subject to the vapor pressure against the vacuum of the space between tanks of the state of the art. All this is achieved without depending on the reliability of any mechanical or electronic system.

In this way, the durability and reliability of the tank is improved, since it does not use devices that require maintenance or are subject to the risk of mechanical failure, and light and flexible composite materials can be used for the external tank and simply sealed solutions, without the need for high levels of impermeability or resistance in the inner tank. The need for devices outside the tank that may worsen thermal insulation is also eliminated.

Optional aspects or alternative implementations of the invention are set forth in the dependent claims.

### BRIEF DESCRIPTION OF THE FIGURES

In order to help a better understanding of the features of the invention and to complement this description, the following figures are attached as an integral part thereof, whose nature is illustrative and not limiting:
Figure 1 shows a tank according to the state of the art.
Figure 2 is a first implementation of the invention with an evaporator 16 consisting of a perforated tube.
Figure 3A shows another implementation where the evaporator consists of a heat exchanger 21, a drainage tube 19 to the bottom of the inner tank and a connecting tube 22 that connects the exchanger to the space between tanks.
Figure 3B illustrates the case in which the invention of Figure 3A is in use in an inverted flight situation.
Figure 4 is a schematic of the pressures exerted by the gas and the liquid when the temperature increases.
Figure 5 is another diagram of the pressures when the temperature is stable.
Figure 6 shows an implementation with the outer insulation in a position different from that of the two previous implementations.
Figure 7 shows an implementation with different insulations and compartments with various functions, wherein the tanks are not concentric.

### DETAILED DESCRIPTION

Figure 1 shows a tank according to the state of the prior art based on a high vacuum insulation or Dewar vessel. The standard tank consists of an inner tank 3 impermeable to hydrogen and which is the one that contains the liquefied gas at a temperature between 20 and 33 Kelvin, an outer tank 1 that allows maintaining a high vacuum atmosphere with a pressure (Pᵢ)) in the space between tanks of the order of less than 100 milli-Torrance and therefore subjected to external pressure Pₒ. In the space between tanks, a multi-layer reflective material 2 is applied in order to prevent heat transmission by radiation between the outer tank and the inner tank. The inner tank is suspended inside the outer tank by supports 4 which, in addition to supporting the loads, must minimize the transmission of heat by conduction through them. The tank has H₂ refueling and extraction systems 5 and venting to the outside 6.

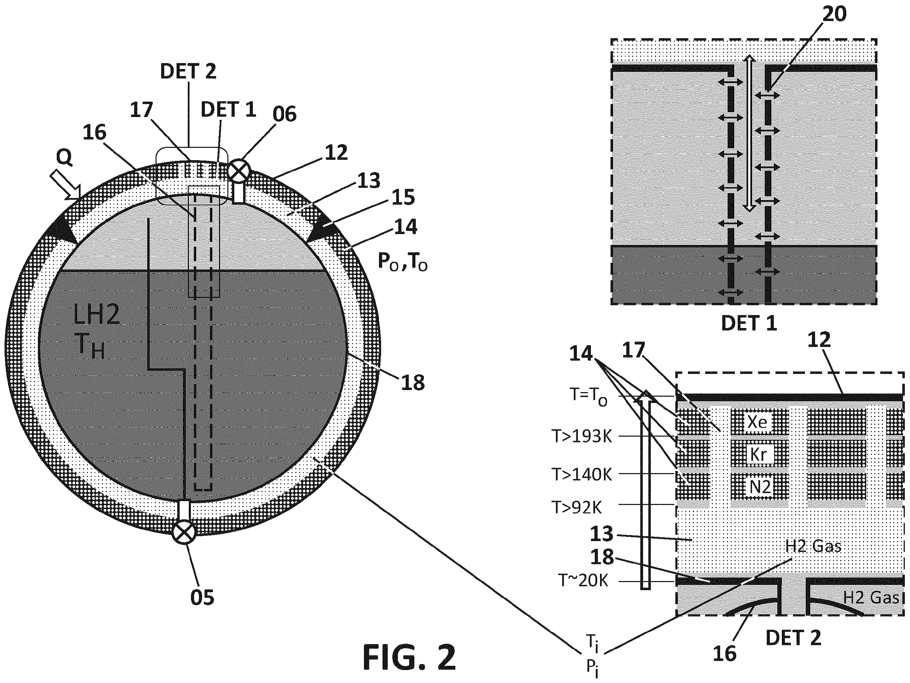

Figure 2 shows the tank with pressure regulated by an evaporator 16 according to the invention. The evaporator 16 in this implementation has the form of a perforated tube that also acts as an anti-splash element: it prevents the LH₂ from passing into the space between tanks due to agitation, while favoring the cooling of the gas phase inside the interior tank by absorbing its heat and transferring it to the liquid phase or using it to evaporate the LH₂ that wets it by splashing. The tank is made up of an outer tank 12, an inner tank 18 held within the outer tank 12 by supports 15. The inner tank contains liquid hydrogen (LH₂). Due to the extremely low temperatures of the inner tank, in the layers next to it, there are only two elements that can be found in a gaseous state: He and H2 that is at a temperature slightly higher than that of the LH₂ in the inner tank or at a pressure slightly lower than that of the inner tank. The H₂ gas coming from the evaporator in the upper zone of the tank always fulfills this condition. However, this gas, H₂, is not a good insulation, so it is preferred to replace it with other gases with less heat transmission as soon as the temperature allows it; the insulation layer in H₂ gas is used to buffer the temperature up to 78-93K from which it is possible to use inert gases that are less heat conductors as gasifying agents for closed cell foam insulation. For this reason, the tank insulation comprises a permeable inner insulation layer 13 (of open-cell, fibrous or aerogel type foam) that is embedded in the H₂ gas atmosphere of the space between tanks and one or more outer insulation layers 14 that are outside the space between tanks and surrounding the external tank 12 on the outside, consisting of closed-cell foams made with gasified plastic materials with elements having low thermal conductivity such as N₂, Kr or Xe. The closed cell insulation layers have venting holes 17 in order to allow hydrogen pressure to balance around the outer insulations 14. The tank also comprises a safety discharge valve 6 and a port for filling and extracting hydrogen 5. In detail 1 of figure 2 you can see the perforations 20 of the evaporator 16 that allow the passage of hydrogen from the tank to the interior of the evaporator 16. The holes are small enough for the H₂ gas to pass without problems and prevent splashes and waves of liquid H₂ from reaching the tube 22 that connects the interior of the evaporator with the space between tanks.

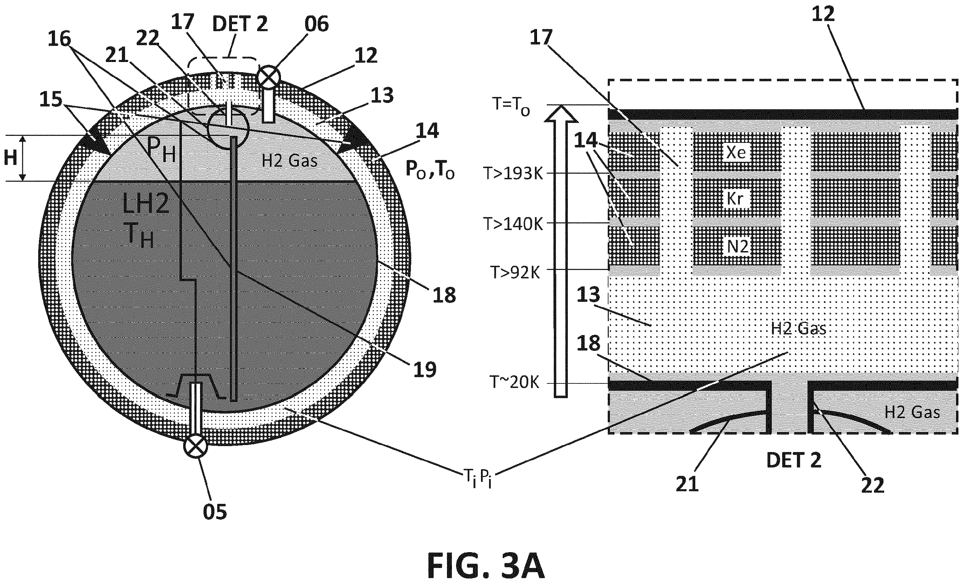

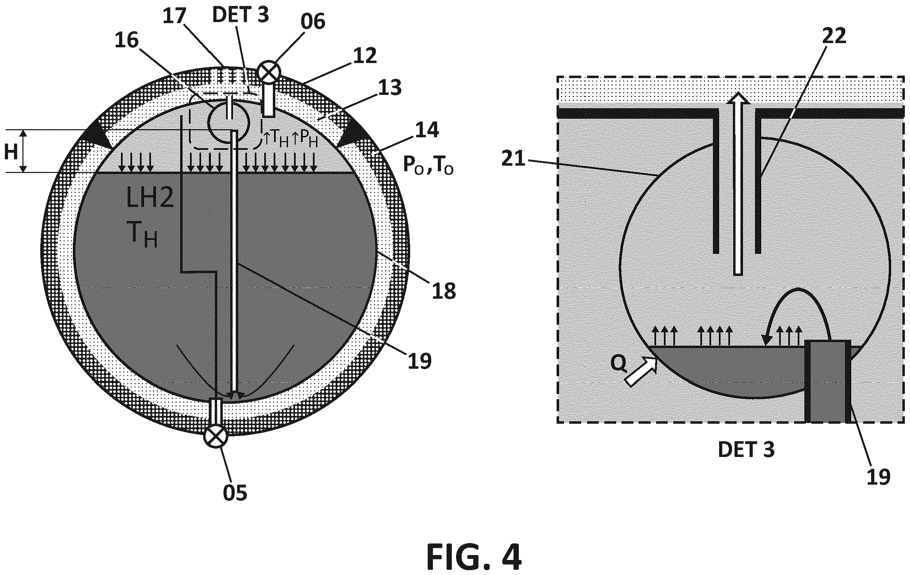

In the implementation of figure 3A, the evaporator 16 is composed of a heat exchanger 21, a drainage tube 19 and a connecting tube 22 connecting the exchanger with the inner insulation layer 13. The evaporator connects through its ends the interior parts of the inner tank 18 and the outer tank 12. The static pressure of the inner tank PH acts on the liquid H₂ in the drainage tube 19. When the liquid hydrogen in the inner tank 18 is heated, the vapor pressure of the same PH increases and overcomes the weight of the H₂ in the drainage tube, causing the flow of LH₂ to the evaporator 16 and of H₂ gas to the space between the tanks (figure 4).

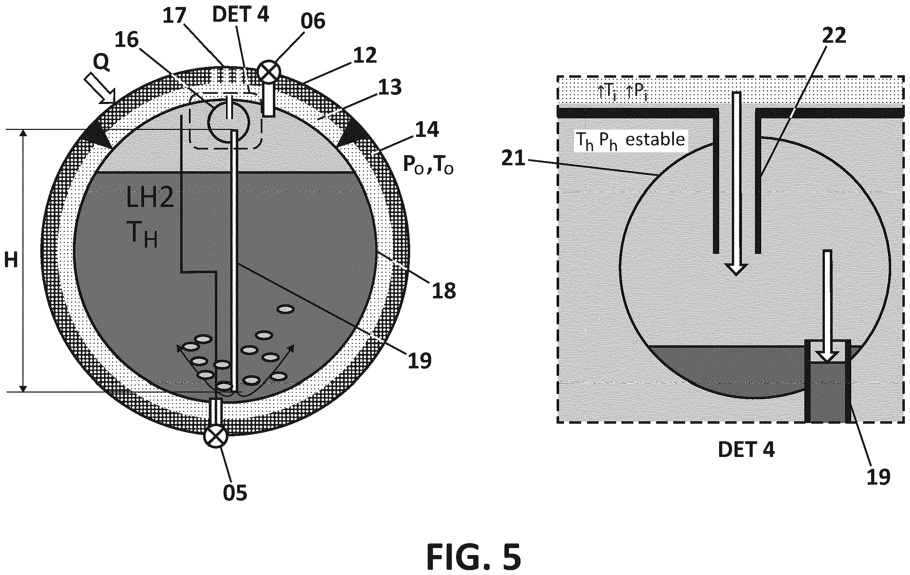

The same happens if hydrogen is extracted from the space between tanks by decreasing the value of Pi. If the gas pressure in the space between the tanks Pi exceeds the pressure Ph plus the pressure of the weight of the hydrogen column inside the drainage tube 19, the liquid in the tube will move, allowing cooled gas to enter the inner tank and rebalancing the pressure (figure 5).

Referring to figure 3A, the tank of the invention has an inner tank 18, an outer tank 12, an inner insulation 13 and an outer insulation 14 that allow hydrogen gas to pass between both sides of the insulation through holes in the upper part 17 in order to maintain the same pressure throughout the volume of H₂ contained between the two tanks. The evaporator 16 maintains at all times a limited differential pressure between the space between tanks and the inner tank so that the tank subjected to the expansive pressure associated with the vapor pressure of LH₂ is the outer tank, which does not need to be under cryogenic conditions. The temperature T_{H} of the LH₂ inside the cryogenic inner tank 18 is maintained between 20K and 33K, making it possible to use the temperature increase of all the H₂ in the inner tank 18 as a heat absorbing medium that enters the inner tank 18, unlike of tanks with high vacuum insulation, in which the temperature is necessarily very close to 20K and all the heat must be absorbed through the evaporation of H₂ that is expelled outside the tank to avoid pressurization cycles under cryogenic conditions. The vapor pressure P_{H} of the liquid hydrogen stored in the cryogenic inner tank 18 shall be between 1 BAR and 12.8 Bar. The evaporator 16 limits at all times the pressure difference between the inner tank 18 and the space between tanks to a value ΔP dependent on of the tank fill level. The transient outside temperature conditions determine whether the H₂ flow is from the inner tank 18 to the space between tanks (predominant in stable situations or when the outside temperature drops) or from the space between tanks to the inner tank 18 (only in cases of rapid rise of outside temperature).

In the implementation of figure 3A, the drainage tube 19 starts from the bottom of the inner tank 18. The pressure difference corresponding to the height H of the hydrogen column shall vary as the inner tank 18 of LH₂ is emptied. Optionally, the insulation layer 13 is made of open-cell, fibrous or aerogel type foam, embedded in the H₂ gas atmosphere of the space between tanks, a layer or layers of outer insulation 14 of closed-cell foam gasified with inert gases with low thermal conductivity such as N2, Kr or Xe that have venting holes 17 in order to allow the balance of hydrogen pressure around the outer insulation 14, a safety discharge valve 6 and a port for the filling and extracting hydrogen 5.

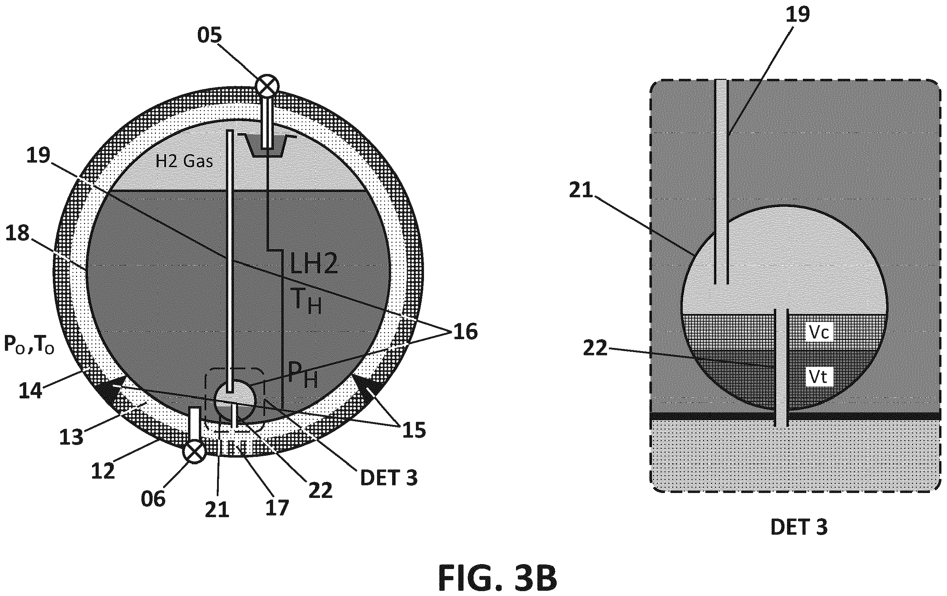

Figure 3B shows the compatibility of this system with the use of the tank in an inverted position for a short period of time, wherein it is seen that the liquid does not pass into the space between tanks through the evaporator 16. To ensure that the liquid contained in the drainage tube 19 at the beginning of the turning does not pass into the space between tanks, it is necessary that the volume (Vc) inside the heat exchanger 21 below the intake of the connecting tube 22, which joins the heat exchanger 21 with the space between tanks, is greater than the volume (Vt) of LH₂ contained in the drainage tube 19, so that it remains contained in the bottom of the heat exchanger 21 without reaching the mouth of the connecting tube 22.

Figure 4 shows the operation of the tank pressure self-regulation faced to a rapid increase in ambient temperature that expands the H₂ between tanks, which pushes the hotter H₂ gas to the heat exchanger 21, moving the H₂ liquid through the drainage tube. 19. If the pressure of the space between tanks exceeds the pressure of the inner tank 18 by a value greater than the height H of the LH₂ column, then the H₂ gas would exit through the drainage tube 19 towards the inner tank 18. In this way, the pressure of the space between tanks shall never exceed the pressure of the inner tank 18 by a value greater than that of said LH₂ column of value H.

Figure 5 shows the operation of the self-regulation of the pressure system of figure 3A during a stable situation in which the LH₂ absorbs heat and progressively increases its temperature. In this situation, the heat flow is practically constant, producing a slow evaporation of the LH₂ stored in the inner tank 18 and increasing the pressure of the gas inside the inner tank 18 until it exceeds that of the space between tanks by the value corresponding to the height H of the LH₂ column which will move the cooler liquid from the bottom of the inner tank 18 through the drainage tube 19 to the heat exchanger 21, wherein it shall absorb heat from the hotter gas from the top of the inner tank 18 attenuating the pressure exerted on the LH₂ and evaporating the liquid that has entered the heat exchanger 21 slightly increasing the pressure in the space between tanks.

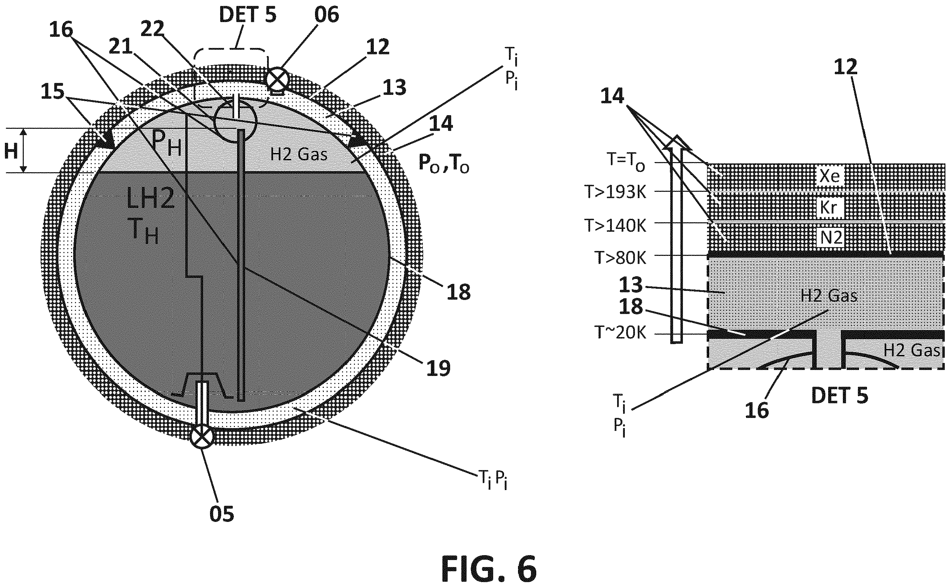

Figure 6 shows a tank similar to the one in figure 3A with the following particularities:
- The outer insulation layers 14 are located in contact with the surface of the outer tank, but in this case outside it, that is, in contact with the outer surface of the tank 12.
- Holes 17 in this solution are not necessary.

With this solution, the requirements of resisting the pressures of the space between tanks for the external insulation made up of closed-cell foams and of being impermeable to the infiltration of H₂ inside the foam are avoided. In exchange for these advantages, the structural outer tank, responsible for supporting the vapor pressure of the LH₂, shall be at temperatures below ambient temperature which will depend on the thickness of the open cell inner insulation 13 within the space between tanks.

The solution of figure 6 allows the adaptation of the tank to store H₂ in the form of cryogenic gas simply by increasing the resistance of the external tank 12 to the typical values of this storage format (between 250 and 300 BAR).

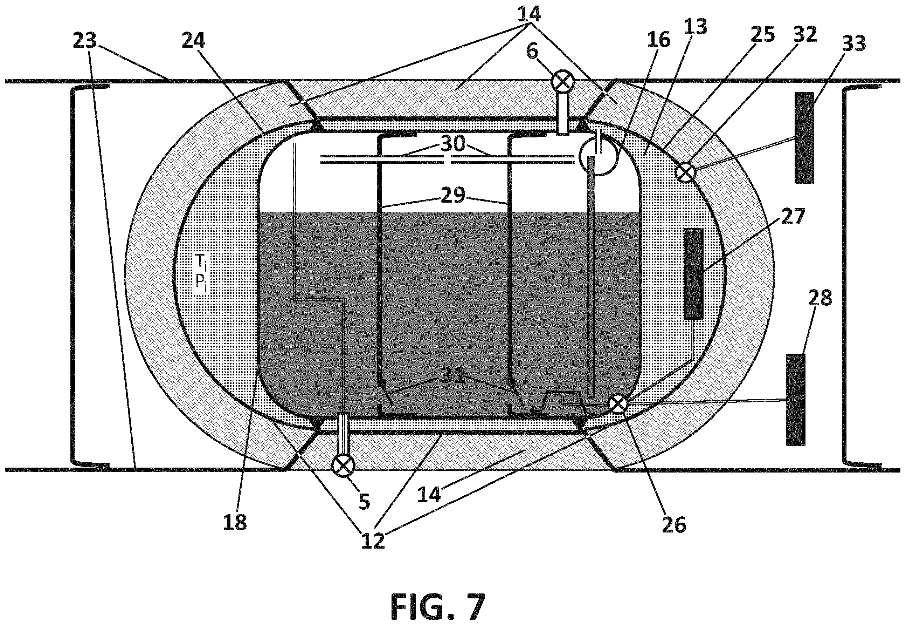

Figure 7 schematically shows a solution for integrating the tank of figure 6 into the fuselage of an aircraft, in such a way that the external tank 12 is formed by the fuselage skin 23 and two pressure bulkheads 24 and 25. In the tank a pump 26 has been added for the extraction of liquid hydrogen towards the aircraft systems, two possible units (27 and 28) fed by LH₂, one 27 located inside the H2 atmosphere of the external tank 12 and another 28 located outside the tank and a regulating valve 32 for the supply of H₂ gas to equipment 33 outside the tank. The inner tank 18 is equipped with two (depending on the length of the tank the number of inner tank bulkheads may vary) separation bulkheads 29 which limit the formation of waves and excessive movements of the center of gravity. The bulkheads have flapper valves 31 to allow the passage of LH₂ to the evaporator compartment 16 and vent tubes 30 to keep the pressure balanced between the three compartments of the inner tank.

In view of this description and figures, the person skilled in the art will understand that the invention has been described according to some preferred embodiments thereof, but that multiple variations can be introduced in said preferred embodiments, without exceeding the object of the invention as claimed.

## Claims

1. Cryogenic tank for storing liquefied H₂ with regulated pressure between the inner and outer tank without mobile elements, comprising an outer tank (12), an inner tank (18) held inside the outer tank (12) by means of supports (15), wherein the inner tank contains liquefied H₂ and the space between tanks contains H₂ in gas form, **characterized in that** it comprises an open-cell inner insulation layer (13) in the space between tanks and in contact with the surface of the inner tank, wherein said inner insulation layer (13) is embedded in the H₂ gas atmosphere of the space between tanks, at least one outer insulation layer (14) in contact with the outer tank (12) comprising closed-cell foams gasified with inert gases of low thermal conductivity and an evaporator (16) inside the inner tank to ensure the exchange of H₂ in gaseous state with the space between tanks.

2. Cryogenic tank for storing H₂ in liquid form according to claim 1, wherein the evaporator (16) is in the form of a perforated tube that extends to the bottom of the inner tank (18).

3. Cryogenic tank for storing H₂ in liquid form according to claim 1 wherein the evaporator (16) comprises a drainage tube (19) that extends to the bottom of the inner tank (18), a heat exchanger (21) at the opposite end and a connecting tube (22) of the heat exchanger with the inner insulation (13).

4. Cryogenic tank for storing H₂ in liquid form according to any of claims 1-3, wherein the outer (12) and inner (18) tanks and insulations (13, 14) are concentric.

5. Cryogenic tank for storing H₂ in liquid form according to claim 1, wherein the outer insulation (14) is in contact with the outermost surface of the outer tank (12).

6. Cryogenic tank for storing H₂ in liquid form according to claim 5, wherein the external tank (12) forms part of the fuselage of an aircraft.

## Patentansprüche

1. Kryogentank zum Speichern von verflüssigtem H₂ mit reguliertem Druck zwischen dem Innentank und Außentank ohne mobile Elemente, mit einem Außentank (12), einem Innentank (18), der im Inneren des Außentanks (12) mittels Abstützungen (15) gehalten wird, wobei der Innentank verflüssigtes H₂ enthält und der Raum zwischen den Tanks H₂ in Gasform enthält,
**dadurch gekennzeichnet, dass** er aufweist:
eine offenzellige Innenisolationslage (13) in dem Raum zwischen den Tanks und in Kontakt mit der Oberfläche des Innentanks, wobei die Innenisolationslage (13) in der H₂-Gasatmosphäre des Raums zwischen den Tanks eingebettet ist, zumindest eine Außenisolationslage (14) in Kontakt mit dem Außentank (12) mit geschlossenzelligen Schäumen, die mit Inertgasen mit geringer thermischer Leitfähigkeit vergast sind, und einen Verdampfer (16) im Inneren des Innentanks zum Sicherstellen des Austausches von H₂ in gasförmigem Zustand mit dem Raum zwischen den Tanks.

2. Kryogentank zum Speichern von H₂ in flüssiger Form gemäß Anspruch 1, wobei der Verdampfer (16) in der Form eines perforierten Rohres ist, das sich zu dem Boden des Innentanks (18) erstreckt.

3. Kryogentank zum Speichern von H₂ in flüssiger Form gemäß Anspruch 1, wobei der Verdampfer (16) ein Ablaufrohr (19), das sich zu dem Boden des Innentanks (18) erstreckt, einen Wärmetauscher (21) an dem entgegengesetzten Ende, und ein Verbindungsrohr (22) des Wärmetauschers mit der Innenisolation (13) aufweist.

4. Kryogentank zum Speichern von H₂ in flüssiger Form gemäß einem der Ansprüche 1 bis 3, wobei der Außentank (12) und der Innentank (18) und Isolationen (13, 14) konzentrisch sind.

5. Kryogentank zum Speichern von H₂ in flüssiger Form gemäß Anspruch 1, wobei die Außenisolation (14) mit der äußersten Fläche des Außentanks (12) in Kontakt steht.

6. Kryogentank zum Speichern von H₂ in flüssiger Form gemäß Anspruch 5, wobei der Außentank (12) einen Teil des Rumpfes eines Luftfahrzeuges ausbildet.

## Revendications

1. Réservoir cryogénique pour stocker du H₂ liquéfié avec une pression régulée entre le réservoir intérieur et extérieur sans éléments mobiles, comprenant un réservoir extérieur (12), un réservoir intérieur (18) retenu à l'intérieur du réservoir extérieur (12) au moyen de supports (15), dans lequel le réservoir intérieur contient du H₂ liquéfié et l'espace entre les réservoirs contient du H₂ sous forme gazeuse, **caractérisé en ce qu'**il comprend une couche d'isolation intérieure (13) à alvéoles ouvertes dans l'espace entre les réservoirs et en contact avec la surface du réservoir intérieur, dans lequel ladite couche d'isolation intérieure (13) est incorporée dans l'atmosphère de gaz H₂ de l'espace entre les réservoirs, au moins une couche d'isolation extérieure (14) en contact avec le réservoir extérieur (12) comprenant des mousses à alvéoles ouvertes gazéifiées avec des gaz inertes de faible conductivité thermique et un évaporateur (16) à l'intérieur du réservoir intérieur pour garantir l'échange de H₂ dans l'état gazeux avec l'espace entre les réservoirs.

2. Réservoir cryogénique pour stocker du H₂ sous forme liquide selon la revendication 1, dans lequel l'évaporateur (16) est sous la forme d'un tube perforé qui s'étend vers le fond du réservoir intérieur (18).

3. Réservoir cryogénique pour stocker du H₂ sous forme liquide selon la revendication 1 dans lequel l'évaporateur (16) comprend un tube de drainage (19) qui s'étend vers le fond du réservoir intérieur (18), un échangeur de chaleur (21) au niveau de l'extrémité opposée et un tube de liaison (22) de l'échangeur de chaleur avec l'isolation intérieure (13).

4. Réservoir cryogénique pour stocker du H₂ sous forme liquide selon l'une quelconque des revendications 1-3, dans lequel les réservoirs extérieur (12) et intérieur (18) et les isolations (13, 14) sont concentriques.

5. Réservoir cryogénique pour stocker du H₂ sous forme liquide selon la revendication 1, dans lequel l'isolation extérieure (14) est en contact avec la surface la plus extérieure du réservoir extérieur (12).

6. Réservoir cryogénique pour stocker du H₂ sous forme liquide selon la revendication 5, dans lequel le réservoir externe (12) fait partie du fuselage d'un aéronef.
